# EUROPEAN PATENT SPECIFICATION

(11) **EP 1 845 287 B1**
(45) Date of publication and mention of the grant of the patent: **19.11.2008**
(21) Application number: 06112192.7
(22) Date of filing: 04.04.2006
(51) Int. Cl.: F16H 57/12

(54) **Adjustable gearwheel system**
Justierbares Zahnradsystem
Système de pignon adjustable

(43) Date of publication of application: 17.10.2007
(73) Proprietor: Ford Global Technologies, LLC, Dearborn, MI 48126 (US)
(72) Inventor: Rengmyr, Staffan, 43445 Kungsbacka (SE)
(74) Representative: Valea AB

(56) References cited:
- EP-A- 0 063 702
- WO-A2-02/48575
- DE-C1- 19 955 474
- FR-A- 2 720 464
- JP-A- 3 131 420
- JP-A- 56 024 257
- JP-A- 58 149 461

## Description

### TECHNICAL FIELD

The present invention relates to gearwheel systems, for example to a gearwheel system comprising a support structure adapted to support a first gearwheel. The gearwheel system further comprises a second gearwheel. The support structure is provided with attachment means for attaching the support structure to a base member and said attachment means permits a backlash between the first and second gearwheels to be varied.

### BACKGROUND OF THE INVENTION

A vehicle comprises several auxiliary assemblies which are important for the function of the vehicle; these auxiliary assemblies are provided in operation with mechanical power. Examples of such assemblies comprise generators, dynamos, starter motors and pumps. Although the assemblies can be supplied with power from other sources than the vehicle engine, for example the assemblies can comprise electrical motors which are supplied with electrical power from a battery of the vehicle, it is sometimes preferable to arrange an auxiliary assembly to be supplied with mechanical power developed directly in the vehicle engine.

Such an arrangement for the assembly is advantageous since it requires no additional motor for the assembly, with a subsequent weight reduction of the vehicle. When mechanical power is transmitted from the vehicle engine to the assembly, a transmission system is used; the transmission system generally comprises a set of gear wheels. As generally is the case when using a set of gear wheels, the gap or the backlash between each connecting pair of gear wheels has to be accurately adjusted in order to avoid several potential gear wheel problems. For example, if the gap or backlash is inaccurately set, the gear wheels are susceptible to generating noise from gear-whine and rattle. Furthermore, the service life of the gear wheels is potentially reduced due to gear teeth interference when operating the gear wheels with an incorrect backlash.

In order to adjust the backlash between a gear wheel associated with an assembly and a corresponding gear wheel associated with an engine, it is known to employ a procedure comprising steps of: preassembling the above mentioned gear wheels by pre-mounting the assembly on the engine; measuring the backlash of the gear wheels; disassembling the gear wheels by dismounting the assembly; fitting one or more shims between the assembly and the engine to adjust a mutual separation of the gear wheels; reassembling the gear wheels; and measuring the backlash thereby obtained. If the desired backlash is not obtained, the procedure is repeated until the target backlash has been reached. This known procedure is cumbersome and expensive, particularly since equipment required for performing the procedure is expensive and time required to implement the procedure adds to manufacturing cost. However, the procedure has been the prevalent method used for adjusting the backlash of gear wheels intended for transmitting power to an assembly since it heretofore has been considered the only method of adjusting the backlash while still obtaining a secure and durable attachment of the assembly to the engine.

DE 199 55 474 describes a gear unit according to the preamble of claim 1 for differential shafts of an internal combustion engine, wherein a first gearwheel is roatable around a shaft fixed to a housing and meshes with a second gearwheel. The second gearwheel is used to drive a pump. The second gearwheel is movable axially parallel in order to adjust a tooth-flank clearance 5 between the gearwheels. The tooth-flank clearance is adjusted by an intermediate layer inserted between the flanks of interlocking teeth on the gearwheels in the form of a coating on the teeth of at least one gearwheel. As the coating wears off, the tooth-flank clearance is obtained.

### SUMMARY OF THE INVENTION

A first object of the present invention is to provide a gearwheel system for a vehicle engine where a backlash of gear wheels transmitting mechanical power from a motor on the vehicle or the vehicle engine itself to an auxiliary assembly supported by the gearwheel system can be adjusted in an efficient manner, from both a time and cost point of view.

This first object is achieved by a gearwheel system defined in the attached claim 1.

The invention relates to a gearwheel system, comprising a support structure adapted to support a first gearwheel. The gearwheel system further comprises a second gearwheel. The support structure is provided with attachment means for attaching the support structure to a base member. The attachment means permits a backlash between the first and second gearwheels to be varied. The gearwheel system utilizes a spacer means between the first and second gearwheels during adjustment of said backlash for correctly setting a degree of backlash desired.

According to the invention, the attachment means comprises a pivotal arrangement about which said support structure is adapted to be pivotally mounted.

According to the invention, the gearwheel system comprises at least one retention member adapted to fixate the support structure at a chosen degree of the aforesaid backlash. In some applications for the gearwheel system, the weight of the gearwheel system is not sufficient to maintain reliably the backlash between the first and second gearwheels. In other applications of the gearwheel system, the system is susceptible to being installed on the bottom of a base member, e.g. a vehicle engine, in which application the gearwheel system is not held in place by gravity, for example in a hanging configuration. Thus, by introducing a retention member, the gearwheel system can be held in place, and hence the above mentioned backlash can be reliably maintained, even when the vehicle engine is in use.

According to the invention, the at least one retention member further comprises a retention opening. The retention opening is adapted to accommodate a strain member adapted to at least partially enclose a threaded member. The threaded member is adapted to cooperate to mutually connect the gearwheel system and the base member. Using the threaded member, a person performing the adjustment can actuate the retention member in a simple manner. Furthermore, as the threaded member is accommodated in the retention opening, unobstructed access to the threaded member is provided, and a person performing the adjustment of the above mentioned distance can use a conventional tool to actuate the threaded member. When the threaded member is fastened, the strain member is expanded, and eventually a contact pressure between the strain member and the retention opening is established. Thus, the support structure of the gearwheel system is fixed in position on the vehicle engine by the above mentioned contact pressure. This is a preferred method of fixating the gearwheel system since the method allows for an angular difference between the threaded member and retention opening. As will be appreciated by a person skilled in the art, adjusting the backlash between a first and second gearwheel by infinitely variably adjusting a support structure of a transmission assembly, comprising a threaded member and an associated retention opening, results in an angular displacement of the threaded member and retention opening.

According to the invention, the retention opening of the retention member also comprises a retention slot having a slot width. The retention slot extends in an axial direction of the retention opening. The retention member further comprises a slot regulating member adapted to adjust the width. Thus, in addition to the above mentioned contact pressure built up by the fastening of the threaded member, the contact pressure can be increased further by fastening the slot regulating member, which decreases the width of the retention slot and thus the cross-sectional area of the retention opening. Thus, an appropriate retention force is susceptible to being obtained. Optionally, the threaded member is not susceptible to building up a contact pressure, but merely keeping the retention member in place. Instead, the slot regulating member is susceptible to building up the total contact pressure.

Using the gearwheel system pursuant to the present invention enables, for example, an installation engineer to install and subsequently adjust a backlash of gear wheels, without having to repeatedly mount and dismount an assembly supporting the first gearwheel.

Also, a need to measure the obtained backlash during an installation procedure is avoided since the installation engineer can rely upon use of spacer means resulting in a predetermined backlash being obtained. Thus, a gearwheel system is provided which can be installed and adjusted in a cost and time efficient way.

Furthermore, arranging the support structure to be pivotally mounted provides for efficient adjustment of the aforesaid backlash. For example, the person or persons performing the adjustment do not have to lift the whole weight of the support structure and associated members when adjusting the backlash. Since the support structure is at least partially supported by the pivotal arrangement, the weight to be carried by the person or persons performing the adjustment is substantially lowered, which provides a better working environment as well as possibly reduces the need for lifting devices or the like in the adjustment procedure.

According to an embodiment of the invention, the base member is adapted to support the second gearwheel. Since the support structure is provided with attachment means for attaching the support structure to the base member and the support structure supports the first gearwheel, the distance between the first gearwheel and the base member can be adjusted to a high degree of accuracy. Thus, if the second gearwheel is supported by the base member, a correspondingly high degree of accuracy is obtained for the backlash. Furthermore, if the base member is adapted to support the second gearwheel, a low, or even non-existent, relative motion is obtained between the second gearwheel and the base member during operation of the gearwheel system. Correspondingly, the backlash adjusted during the mounting of the gearwheel system is maintained during the service life of the gearwheel system.

According to a further embodiment of the invention, the first gearwheel is supported on a first axis of rotation and the pivotal arrangement has a pivotal axis substantially parallel to this first axis of rotation. Arranging the pivotal axis of the pivotal arrangement in this way is preferable since the first axis of rotation is maintained parallel to the pivotal axis for every possible adjusted position of the support structure. Thus, a risk of mounting the first gearwheel with an unintended angular offset to a second gear wheel of, for example, a vehicle engine is significantly reduced. In other words, the angular tolerance of an adjusted gearwheel system comprising the first gearwheel and a second gearwheel is substantially decreased.

Openings or bores for the pivotal axis in the vehicle engine can preferably be manufactured in the same setup used when drilling the holes for a second gearwheel on a second axis of rotation, e.g. gear shaft holes of a vehicle engine. Using such a manufacturing procedure, an accurate axial parallelism between the pivot axis and the second axis of rotation can be obtained. This parallelism further reduces the aforesaid angular tolerance. This procedure helps to ensure that the pivot axis is parallel to the second axis of rotation. Furthermore, if the pivot axis is susceptible to being parallel to the first axis of rotation, the procedure ensures that the pivot axis, the first axis of rotation and the second axis of rotation are parallel.

Preferably, the strain member includes a circumferential groove therearound into which the regulating member at least partially intersects in operation to assist in retaining the strain member within the retention opening. This is an advantageous implementation of the retention member since it prevents the regulating member and/or strain member from falling out of place during, or even prior to, the backlash adjustment procedure.

Preferably, the support structure is operable to adjust the backlash by adjusting a distance in a first direction between the first gearwheel and the base member, wherein the slot regulating member in operation extends in a direction substantially perpendicular to the aforesaid first direction. Thus, the straining of the strain member and corresponding fixating of the position of the support structure is affected in a direction substantially perpendicular to the direction of the adjustment. This is advantageous, since the risk of an unintentional alteration of the position of the support structure, and correspondingly the backlash, during the fixating of the support structure is thus significantly reduced.

According to an embodiment of the invention, the pivotal arrangement is adapted to receive a pin for pivotal attachment of said gearwheel mounting. Using a pin enables a pivotal arrangement with a pivotal axis to be easily obtained, for example the vehicle engine is optionally provided with bores or openings for supporting the pin.

According to an embodiment of the invention, the pin has an annular cross-section for facilitating its installation to the vehicle engine. Preferably, the annular pin comprises a longitudinally extending slot. Thus, the annular pin including the slot can be compressed before installation of the gearwheel system and subsequently released after such installation, allowing the pin to radially expand towards walls of a bore or openings in the vehicle engine, thereby forming a strong attachment. Furthermore, providing the pin with a longitudinally extending slot allows the pin to compensate for differences in thermal expansions of the pin and corresponding openings.

According to a further embodiment of the invention, the pivotal arrangement comprises at least one attachment opening in the support structure, adapted for accommodating the pin. Thus, the pin is susceptible to being produced separately to the support structure, which simplifies the manufacture, as well as the installation, of both the support structure and the pin.

According to an embodiment of the invention, the spacer means comprises a spacer layer, adapted to be arranged between the first and second gearwheels during adjustment of the backlash. Using a spacer layer, obtaining a predetermined backlash can be quickly achieved during an adjustment procedure without a need of additional measuring devices and/or time consuming measurement methods.

According to a further embodiment of the invention, the spacer layer comprises a spacer coating, adapted to be applied onto the first gearwheel. This is preferable, since the spacer coating can be applied prior to the mounting of the gearwheel system. The spacer layer does not have to be delivered separately of the first gearwheel and an installation engineer, for example, does not have to consider a separate spacer layer during the adjustment of the backlash.

According to an embodiment of the invention, the spacer layer comprises a spacer coating, adapted to be applied on the second gearwheel.

According to a further embodiment of the invention, the spacer layer is adapted to be removed after the adjustment of said backlash.

Another embodiment of the invention relates to a vehicle engine, comprising a gearwheel system according to the present invention.

A further embodiment of the invention relates to a vehicle, comprising a gearwheel system according to the present invention and/or a vehicle engine with the above mentioned features.

### BRIEF DESCRIPTION OF THE DRAWINGS

The present invention will hereinafter be further explained by means of non-limiting examples with reference to the appended figures wherein;
- Fig. 1: is a first perspective view of one embodiment of a gearwheel system of the invention, mounted on a vehicle engine;
- Fig. 2: is a second perspective view of the gearwheel system in Fig. 1;
- Fig. 3: is a detailed view of the gearwheel system in Fig. 1, illustrating components of attachment means and retention means of the Fig. 1 embodiment;
- Fig. 4a: is a cross-section view of the retention means of the Fig. 1 embodiment;
- Fig. 4b: is a cross-section view of a second embodiment of the retention means;
- Fig. 4c: is a cross-section of the embodiment shown in Fig. 4b, where a gearwheel support structure is fixated to a vehicle engine;
- Fig. 5: illustrates a plurality of embodiments of a cylinder, susceptible to being used in the attachment means;
- Fig. 6: is a side view of an embodiment of the invention with alternative attachment means;
- Fig. 7: is a side view of an alternative embodiment of the invention including a first and second gearwheel;
- Fig. 8a: is a side view of a first and second gearwheels wherein the first gearwheel is provided with a spacer coating; and
- Fig. 8b: is a side view of the Fig. 8a embodiment wherein the spacer coating is removed.

### DETAILED DESCRIPTION OF PREFERRED EMBODIMENTS

The invention will, in the following, be exemplified by embodiments. It should however be realized that the embodiments are included in order to explain principles of the invention and not to limit the scope of the invention, defined by the appended claims.

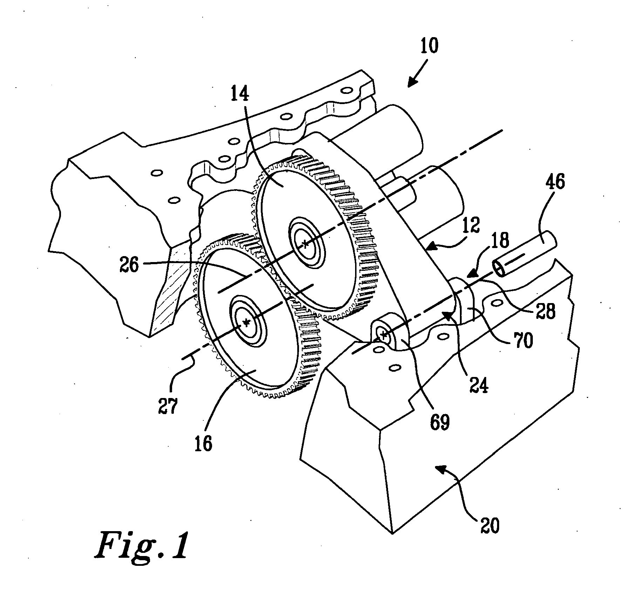

Fig. 1 illustrates a preferred embodiment of the invention, wherein a gearwheel system is indicated generally by 10. In the embodiment illustrated in Fig. 1, the gearwheel system 10 is connected to an oil pump, which is a preferred application of the invention. However, the gearwheel system can support one or more auxiliary assemblies supplied with mechanical power from the vehicle engine, for example a generator, dynamo or a starter motor. The gearwheel system can further support a pump of a different kind than an oil pump, for instance a water pump, washer fluid pump, ventilation fan and similar.

The gearwheel system according to the embodiment illustrated in Fig. 1 is mounted on a vehicle engine. As used herein, the expression "vehicle engine" is intended to include engines suitable for any type of transport vessel, for example cars, lorries, trucks, busses, boats, air craft, motorbikes and so forth.

The gearwheel system 10 comprises a support structure 12 adapted to support a first gearwheel 14. The support structure 12 in the Fig. 1 embodiment is in one piece. However, in some embodiments of the invention, it can be preferable to have a support structure 12 constituted by several separate pieces, fixedly attached to one another. As illustrated in Fig. 1, the gearwheel system 10 further comprises a second gearwheel 16. The first gearwheel 14 is adapted to engage with the second gearwheel 16. The support structure 12 is provided with attachment means 18 for attaching the support structure 12 to a base member 20. In the embodiment of Fig. 1, the base member 20 is illustrated as an engine block of a vehicle engine 20; since the vehicle engine in the embodiment of Fig. 1 constitutes the base member, reference number 20 has been used for both these members. The attachment means 18 permits a backlash 22 between the first and second gearwheels 14, 16 to be varied.

According to the invention, the gearwheel system 10 utilizes a spacer means 23 between the first and second gearwheels 14, 16 during adjustment of said backlash 22. Furthermore, the attachment means 18 comprises a pivotal arrangement 24 about which said support structure 12 is adapted to be pivotally mounted.

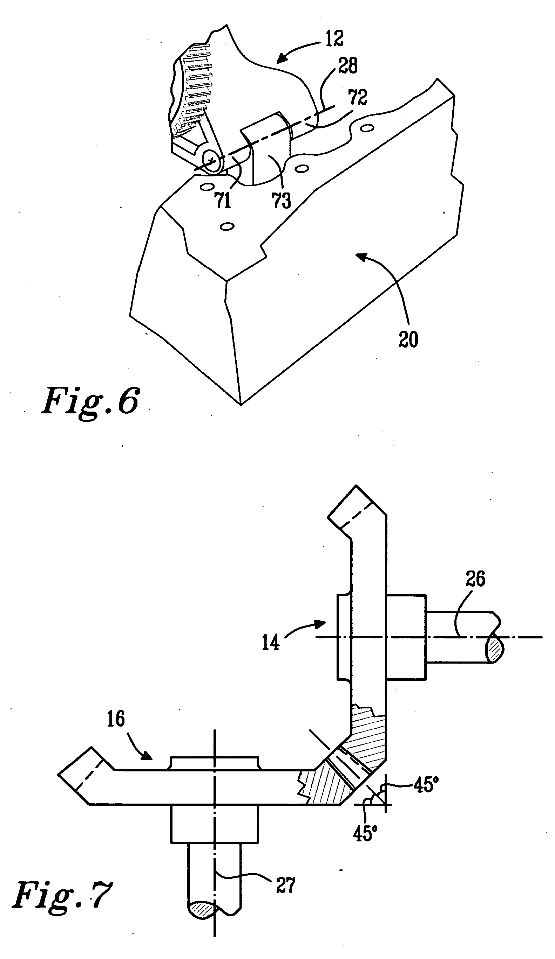

In the embodiment of Fig. 1, first and second axes 26, 27 of rotation, corresponding to the first and second gearwheel 14, 16, respectively, are parallel since the gearwheels 14, 16 are of conventional type. However, if a transmission of a worm gearing type is employed for example, the first and second axes of rotation 26, 27 are not necessarily parallel. As a further example, as illustrated in Fig. 7, the gearwheels 14, 16 are susceptible to having 45° teeth, such that the axes of rotation 26, 27 of the first gearwheel 14 and the second gearwheel 16 are substantially perpendicular.

As illustrated in Fig. 1, in a preferred embodiment of the invention, the base member 20 is adapted to support the second gearwheel 16. Fig. 1 further illustrates a vehicle engine 20, wherein the second gearwheel 16 is connected to the vehicle engine 20 and is operable to be driven by the engine 20. Furthermore, the vehicle engine has a crankshaft (not shown) and the second gearwheel 16 is connected to the crankshaft. Depending on the location of the gearwheel system 10 with respect to the vehicle engine 20, the second gearwheel 16 is susceptible to being driven by any other part of the vehicle engine 20.

As can be seen from Fig. 1, the first gearwheel 14 is supported on a first axis of rotation 26. Furthermore, the attachment means 18 comprises a pivotal arrangement 24 about which the support structure 12 is adapted to be pivotally mounted. The support structure 12 is susceptible to being pivotally movable around a pivot point by adapting the pivotal arrangement 24 to comprise a ball and socket connection for example. However, the pivotal arrangement 24 preferably forms a pivot axis 28, thus limiting the pivoting of the support structure 12 to one degree of freedom only; a pivot axis 28 has a benefit that it is capable of providing a more rigid and robust form of mount. The pivot axis 28 around which the support structure 12 can pivot, in one embodiment of the invention (not shown), extends in a direction substantially perpendicular to the first axis of rotation 26 in order to obtain a compact gearwheel system 10. The pivot axis 28 can extend in any direction, depending on for example the space available around the gearwheel system 10. However, as illustrated in Fig. 1, in a preferred embodiment of the invention, the pivotal arrangement 24 has its pivot axis 28 substantially parallel to the first axis of rotation 26.

When the pivot axis 28 is parallel to the first axis of rotation 26 and the first axis of rotation 26 and second axis of rotation 27 are parallel, openings or bores for the pivotal axis 28 in the vehicle engine 20 can preferably be manufactured in the same setup used when drilling the holes for the second axes of rotation 27, e.g. the gear shaft holes. Using such a manufacturing procedure, an accurate axial parallelism between the pivotal axis 28 and the second axis of rotation 27 can be obtained. This reduces the angular tolerance between the pivotal axis 28 and the second axis of rotation 27.

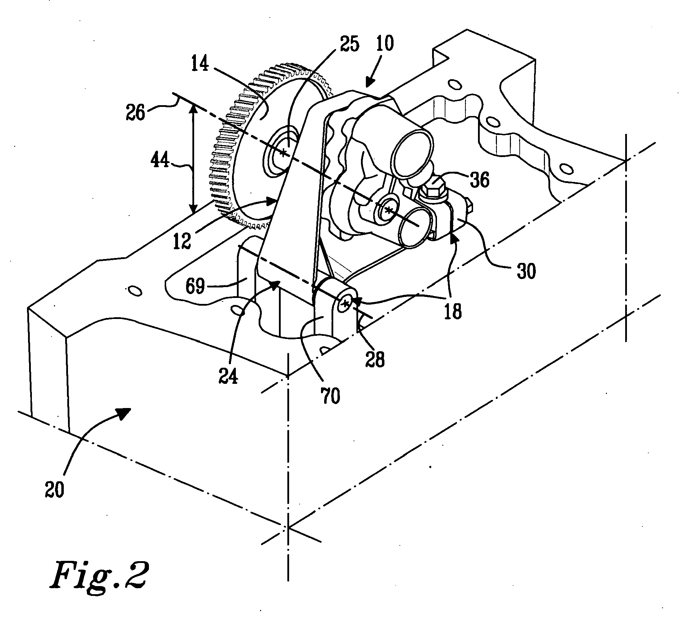

Fig. 2 illustrates a gearwheel system 10 according to one embodiment of the invention, wherein the attachment means 18 comprises at least one retention member 30 adapted to fixate the support structure 12 at a chosen value of the backlash 22. In the embodiment of the invention in Fig. 2, one part of the retention member 30 is a portion of the support structure 12, but in some embodiments of the invention, the retention member 30 is manufactured separately and subsequently attached to the support structure 12. Furthermore, in Fig. 2 the retention member 30 is located at a distance from the pivotal arrangement 24. However, it is possible to have the retention member 30 located in a different location on the support structure 12. Furthermore, in some embodiments of the invention, it is preferred to have several retention members 30 located in several locations of the support structure 12, depending on the space available for accommodating the retention members 30. The location of the retention member 30 illustrated in Fig. 2 is preferable in this particular embodiment of the invention, since the retention member 30 can easily be actuated by a user. Furthermore, when the retention member 30 is located at a distance from the pivotal arrangement 24, the retention member 30 and pivotal arrangement 24 provide a reliable and more robust attachment assembly for the support structure 12.

In Fig. 2, the at least one retention member 30 is illustrated comprising a threaded member 36 adapted to connect the support structure 12 and the vehicle engine 20. However, the retention member 30 is susceptible to being implemented using a plurality of different types of locking mechanisms, for example a snap-in locking device. The support structure 12 is capable of being permanently fixed to the vehicle engine 20, after the adjustment procedure, by conventional attachment means such as welding or gluing. In Fig. 2, the threaded member 36 is illustrated as directly connecting the support structure 12 and vehicle engine 20. In some embodiments of the invention, the threaded member 36 however, is optionally connected to one or more intermediate members, wherein at least one of the intermediate members is connected to the vehicle engine 20.

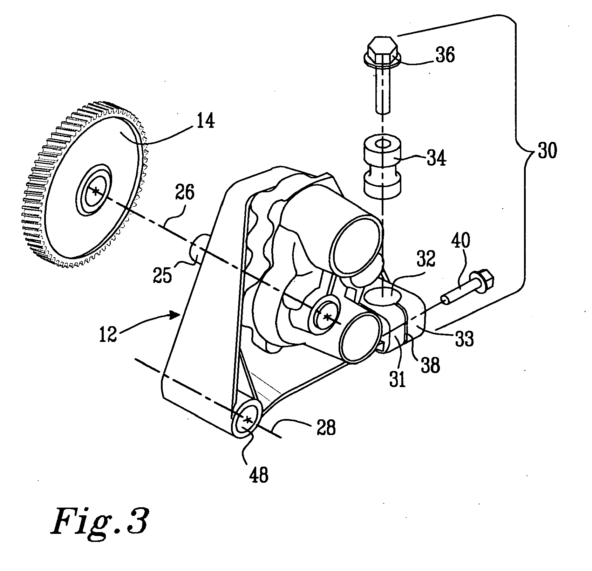

Fig. 3 illustrates a part associated with the support structure 12 of an embodiment of the invention in exploded view, wherein the at least one retention member 30 further comprises a strain member 34, adapted to be strained by the threaded member 36. The strain member 34 is preferably fabricated from an elastic material, such as rubber. However, since the strain member 34, in certain applications of the invention, is susceptible to being located in an oil filled environment, the strain member 34 in these applications is preferably fabricated from a flexible material, resistant to oil and other fluids of a vehicle engine, e.g. an oil durable rubber, an oil-resistant synthetic polymer or plastic material. The strain member 34 is optionally fabricated from a stiff material, for example steel, adapted to be a flexible member. The strain member 34 is optionally implemented as a metal spring. In Fig. 3, the strain member 34 is illustrated as being located in the same location as the threaded member 36. However, the strain member 34 and the threaded member 36 are optionally mutually located at a distance from one another. Furthermore, in some embodiments of the invention, it is preferred to have several strain members 34, adapted to be located in several locations of the support structure 12.

Fig. 3 further illustrates a gearwheel system 10 of one embodiment of the invention, wherein the at least one retention member 30 further comprises a retention opening 32 in the support structure 12 for accommodating the threaded member 36. In the embodiment of Fig. 3, the threaded member 36 is adapted to be attached to a threaded opening (not shown) in the vehicle engine 20, but the threaded member 36 is optionally rigidly attached to the vehicle engine 20. Furthermore, in some embodiments of the invention, the threaded member 36 is optionally fixed, either rigidly or pivotally, to the support structure 12 and adapted to extend through an opening not shown of the vehicle engine 20 and strained by a nut for example (not shown).

In the embodiment of Fig. 3, the strain member 34 at least partially encloses the threaded member 36 and the strain member 34 and threaded member 36 are adapted to be accommodated in the retention opening 32. In Fig. 3, the strain member 34 is illustrated as having the shape of a reel, but the strain member 34 optionally is of alternative shapes, for example a cylindrical shape. As illustrated in Fig. 3, the cross-sectional shape adopted does not necessarily have to be constant along the axial extension of the strain member 34.

In the embodiment of the invention illustrated in Fig. 3, the retention opening 32 comprises a retention slot 38 having a slot width extending in the axial extension of the retention opening 32. Furthermore, the slot 38 has an associated slot regulating member 40 adapted to adjust the width of the retention slot 38. In Fig. 3, the slot regulating member 40 is a bolt, but the width of the slot 38 is susceptible to being regulated by other means, for instance clamp bracing shanks 31, 33 of the retention member 30.

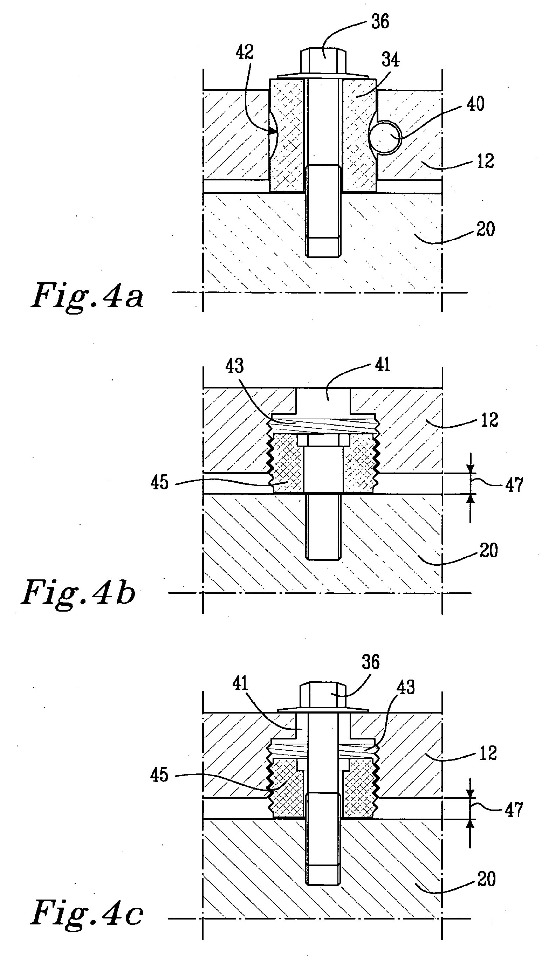

As further illustrated in Fig. 4a, the slot regulating member 40 is preferably accommodated in a circumferential concave-profile groove 42 of the strain member 34. This position of the slot regulating member 40 ensures that the slot regulating member 40 will be held in place by the strain member 34, and vice versa, during the adjustment procedure, even if the slot regulating member is not threaded to the support structure 12. The groove 42 can be symmetrically located on the strain member 34, namely halfway up the strain member 34.

Preferably, said support structure 12 is operable to assist in adjusting the backlash 22 by adjusting a distance 44 in a first direction between the first gearwheel 14 and the base member 20. The slot regulating member 40 in operation preferably extends in a direction substantially perpendicular to the first direction. Thus, the straining of the strain member 34 and corresponding fixating of the position of the support structure 12 is affected in a direction substantially perpendicular to the direction of the adjustment. This is advantageous, since the risk of an unintentional alteration of the position of the support structure 12, and consequently the backlash, during the fixating of the support structure 12 is thus significantly reduced.

Figs. 4b and 4c disclose another implementation of the retention opening 32 which has two portions, one upper narrow portion 41 for accommodating the threaded member 36 only and one lower wide portion 43. As illustrated in Fig. 4b, a distance 47 between the support structure 12 and the vehicle engine 20 is adjusted by an adjustment member 45, adapted to be threadably attached to the support structure 12. The adjustment member 45 is actuated by a tool (not shown) via the upper narrow portion 41 of the retention opening 32. When the desired distance 47 is obtained, the support structure 12 is fixated to the vehicle engine 20 by a threaded member 36, as shown in Fig. 4c.

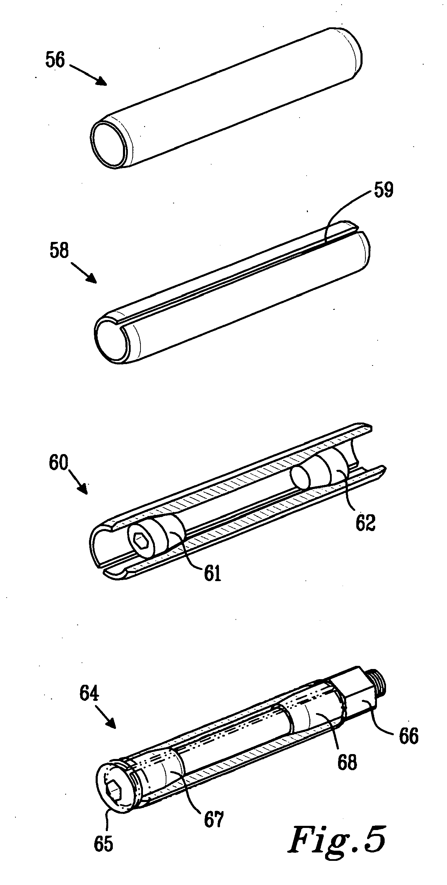

In a preferred embodiment of the invention, the pivotal arrangement 24 is adapted to receive a pin 46 for pivotal attachment of the support structure 12. In the figures, e.g. Fig. 1 and Fig. 5, the pin 46 is illustrated as having a cylindrical cross-section. However, several other cross-sections of the pin 46 can alternatively be used. Furthermore, the cross-section of the pin 46 is not necessarily constant along the extension of the pin 46. For example, one portion of the pin 46 optionally can have a rectangular or even a splined cross-section and another portion optionally has a cylindrical cross-section.

However, as illustrated in Fig. 1, the pin 46 preferably is implemented as a cylinder 46 having an annular cross-section. Furthermore, the cylinder 46 preferably comprises a longitudinally extending slot. In Fig. 5, several embodiments of the cylinder susceptible to forming the pin 46 are illustrated. A topmost cylinder indicated by 56 has an annular cross section; a second cylinder indicated by 58 has an annular cross-section with an axially extending slot 59, the axially extending slot 59 extends over the whole of the cylinder 58. However, in some applications, it suffices to have the slot 59 extending over a portion of the cylinder 58 only. Providing the cylinder 58 with the longitudinally extending slot 59 allows the cylinder 58 to compensate for differences in thermal expansions of the cylinder 58 and corresponding openings. A third cylinder indicated by 60 is a further development of the second cylinder 56, the third cylinder 60 comprising conical lock screws 61, 62 for expanding the diameter of the cylinder 60 after the installation of the gearwheel system 10. A fourth cylinder indicated by 64 is a further development of the third cylinder 60, the fourth cylinder 64 comprising a bolt 65 extending through the opening of the cylinder 64 and a nut 66 for straining the bolt 65. When the bolt 65 is strained, the cylinder 64 will expand by the added contact surface pressure applied on the cylinder 64 by conical contact members 67, 68.

Fig. 3 illustrates one embodiment of the invention where the pivotal arrangement 24 comprises at least one attachment opening 48 in the support structure 12, adapted for accommodating the pin 46. In Fig. 3 the opening 48 is illustrated as a cylindrical opening, however other types of openings are optionally alternatively employed. In the embodiment of Fig. 3, the support structure 12 has one single axially extending opening 48. Furthermore, as shown in Fig. 2, the vehicle engine 20 according to this embodiment is equipped with two supporting members 69, 70, each supporting member 69, 70 having an opening for supporting the pin 46. In the embodiment according to Fig. 6 however, the support structure 12 has two pivotal arrangement members 71, 72, each member 71, 72 having an opening and the vehicle engine 20 is equipped with one single supporting member 73 with one single opening. Other combinations of openings in the support structure and members associated to the vehicle engine 20 are of course possible.

Preferably, in order to further reduce the angular tolerance between: the pivotal axis 28; the first axis of rotation 26; and the second axis of rotation 27, the attachment opening 48 in the support structure 12 is manufactured using the same tool as when manufacturing the corresponding openings in the vehicle engine 20.

In the Fig. 3 embodiment, the first gearwheel 14, namely a radial toothed gear wheel, is arranged to be connected to the gearwheel system 10 via a shaft 25, extending through the support structure 12.

The gearwheel system 10 can be provided with the spacer means 23 in a plurality of different ways. For example, the spacer means 23 can be constituted by a measuring device (not shown) by which the backlash 22 is measured using a laser beam for example. However, in a preferred embodiment of the invention, the spacer means 23 comprises a spacer layer 50, adapted to be arranged between the first and second gearwheels 14, 16 during adjustment of the backlash 22. The spacer layer 50 can for example be a sheet of a suitable material which is adapted to be applied between the first and second gearwheels 14, 16, which sheet has a predetermined thickness. When the first and second gearwheels 14, 16 are pressed to one another in a backlash adjustment procedure, the aforementioned sheet will deform and allow only a small residual distance between the first and second gearwheels 14, 16. When the sheet is subsequently removed, the residual distance obtained is the resulting backlash 22.

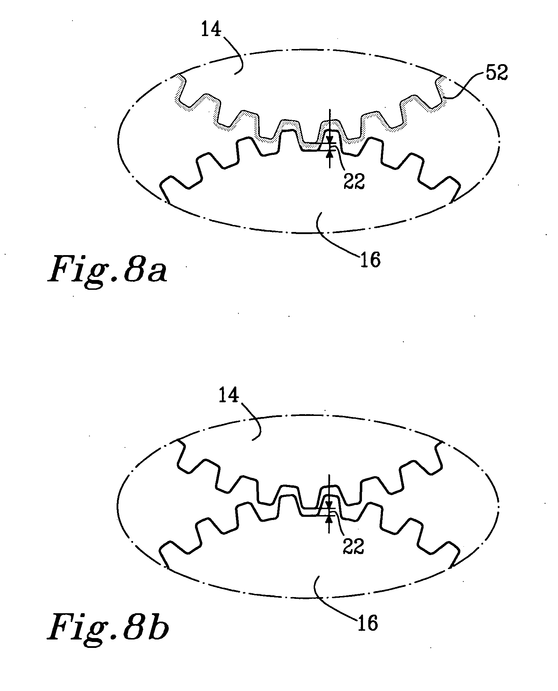

Preferably, as illustrated in Fig. 8a, the spacer layer 50 comprises a spacer coating 52, adapted to be applied on the first gearwheel 14. However, in some embodiments of the invention, the spacer coating 52 can be adapted to be applied on the second gearwheel 16 instead. Further, some embodiments comprise a spacer coating 52, adapted to be applied on both the first and the second gearwheels 14, 16. As can be seen from Fig. 8a, when the spacer coating 52 is present, there is a residual space between the first and second gearwheels 14, 16.

For ensuring a uniform thickness and avoidance of drop formation, it is desirable that the spacer coating 52 is applied by a way of vacuum deposition process. Preferably, the spacer layer 50 is adapted to be removed or worn away promptly after the adjustment of said backlash 22. For example Fig. 8b illustrates the first and second gearwheels of the Fig. 8a embodiment where the spacer coating 52 has been removed and a final backlash is obtained. The spacer layer 50 can in some applications of the invention be removed by the gearwheel system mounting team or even by the robot performing the gearwheel system 10 mounting. However, in a preferred embodiment of the invention, the spacer layer 50 is left in the gearwheel system after the backlash adjustment. Subsequently, when the vehicle engine is running, the spacer layer 50 is worn off during transmission of mechanical power between the first and second gearwheels 14, 16.

An example of a spacer coating to be used for the aforementioned purposes is a product with trade name SPACECOAT®, provided by Miba AG, Austria.

Further modifications of the invention within the scope of the claims are feasible. For instance, the first gearwheel 14 of the gearwheel system 10 can be arranged to receive mechanical power from an electric motor, associated with the vehicle engine 20.

Furthermore, in the retention member 30 according to the Fig. 4a embodiment, the slot regulating member 40 can optionally be omitted. The retention slot 38 can also optionally be omitted. Omitting both the slot regulating member 40 and the retention slot 38 results in a retention member 30 which is fixated only by the threaded member 36 via the strain member 34.

In the retention member 30 according to the Fig. 4a embodiment, the threaded member 36 is susceptible to being provided with a more coarse thread with a larger thread angle than the slot regulating member 40.

In the retention member 30 according to the Fig. 4b embodiment, the threaded member 36 is susceptible to being provided with a more fine thread with a smaller thread angle than the adjustment member 495.

Moreover, although utilization of the present invention is described with a pump in the foregoing, it will be appreciated that the present invention can also be used for a vehicle generator, dynamo, motor, electric motor or similar. Furthermore, the present invention can preferably be used in hydrid vehicle engines.

## Claims

1. A gearwheel system (10), comprising a support structure (12) adapted to support a first gearwheel (14), said gearwheel system (10) further comprising a second gearwheel (16), said support structure (12) being provided with attachment means (18) for attaching the support structure (12) to a base member (20), said attachment means (18) permitting a backlash (22) between the first and second gearwheels (14,16) to be varied, wherein said gearwheel system (10) utilizes a spacer means (23) between the first and second gearwheels (14,16) during adjustment of said backlash (22), **characterized in that** said attachment means (18) comprises a pivotal arrangement (24) about which said support structure (12) is adapted to be pivotally mounted, wherein said attachment means (18) comprises at least one retention member (30) adapted to fixate said support structure (12) at a chosen value of said backlash (22), wherein said at least one retention member (30) further comprises a retention opening (32) adapted to accommodate a strain member (34) adapted to at least partially enclose a threaded member (36), said threaded member (36) being adapted to cooperate to mutually connect said support structure (12) and said base member (20), wherein said retention opening (32) of said retention member (30) comprises a retention slot (38) having a slot width, wherein said retention slot (38) extends in an axial direction of said retention opening (32), said retention member (30) further comprising a slot regulating member (40) adapted to adjust said width.

2. A gearwheel system (10) according to claim 1, wherein said base member (20) is adapted to support said second gearwheel (16).

3. A gearwheel system (10) according to claim 1 or 2, wherein said first gearwheel (14) is supported on a first axis of rotation (26) and said pivotal arrangement (24) has a pivot axis (28) substantially parallel to said first axis of rotation (26).

4. A gearwheel system (10) according to any one of the preceding claims, wherein the strain member (34) includes a circumferential groove (42) therearound into which the regulating member (40) at least partially intersects in operation to assist in retaining the strain member (34) within the retention opening (32).

5. A gearwheel system (10) according to any one of the preceding claims, wherein said support structure (12) is operable to assist in adjusting said backlash (22) by adjusting a distance (44) in a first direction between the first gearwheel (14) and the base member (20), wherein said slot regulating member (40) in operation extends in a direction substantially perpendicular to said first direction.

6. A gearwheel system (10) according to any of the preceding claims, wherein said pivotal arrangement (24) is adapted to receive a pin (46), for pivotal attachment of said support structure (12).

7. A gearwheel system (10) according to claim 6, wherein said pin (46) has a substantially annular cross-section.

8. A gearwheel system (10) according to claim 7, wherein said pin (46) comprises a longitudinally extending slot.

9. A gearwheel system (10) according to any one of claims 6 to 8, wherein said pivotal arrangement (24) comprises at least one attachment opening (48) in said support structure (12), adapted for accommodating said pin (46).

10. A gearwheel system (10) according to any of the preceding claims, wherein said spacer means (23) comprises a spacer layer (50), adapted to be arranged between the first and second gearwheels (14, 16) during adjustment of said backlash (22).

11. A gearwheel system (10) according to claim 10, wherein said spacer layer (50) comprises a spacer coating (52), adapted to be applied on the first gearwheel (14).

12. A gearwheel system (10) according to claim 10 or 11, wherein said spacer layer (50) comprises a spacer coating (52), adapted to be applied on the second gearwheel (16).

13. A gearwheel system (10) according to any one of claims 10 to 12, wherein said spacer layer (50) is adapted to be removed or worn away after the adjustment of said backlash (22).

14. A vehicle engine (54), comprising a gearwheel system (10) according to any of the preceding claims.

15. A vehicle, comprising a gearwheel system (10) according to any one of claims 1 to 13 and/or a vehicle engine (54) according to claim 14.

## Patentansprüche

1. Zahnradsystem (10), das eine Unterstützungsstruktur (12) umfasst, die dazu ausgelegt ist, ein erstes Zahnrad (14) zu unterstützen, wobei das Zahnradsystem (10) ferner ein zweites Zahnrad (16) umfasst, wobei die Unterstützungsstruktur (12) mit Befestigungsmitteln (18) zum Befestigen der Unterstützungsstruktur (12) an einem Basiselement (20) versehen ist, wobei die Befestigungsmittel (18) ermöglichen, ein Spiel (22) zwischen dem ersten und dem zweiten Zahnrad (14, 16) zu verändern, wobei das Zahnradsystem (10) während der Einstellung des Spiels (22) ein Abstandshaltemittel (23) zwischen dem ersten und dem zweiten Zahnrad (14, 16) verwendet, **dadurch gekennzeichnet, dass** die Befestigungsmittel (18) eine Schwenkanordnung (24) umfassen, um die schwenkbar die Unterstützungsstruktur (12) angebracht werden kann, wobei die Befestigungsmittel (18) wenigstens ein Halteelement (30) umfassen, das dazu ausgelegt ist, die Unterstützungsstruktur (12) bei einem gewählten Wert des Spiels (22) zu fixieren, wobei das wenigstens eine Halteelement (30) ferner eine Halteöffnung (32) umfasst, die dazu ausgelegt ist, ein Beanspruchungselement (34) aufzunehmen, das dazu ausgelegt ist, ein Gewindeelement (36) wenigstens teilweise zu umschließen, wobei das Gewindeelement (36) dazu ausgelegt ist, so zusammenzuwirken, dass es die Unterstützungsstruktur (12) und das Basiselement (20) miteinander verbindet, wobei die Halteöffnung (32) des Halteelements (30) einen Halteschlitz (38) mit einer Schlitzbreite umfasst, wobei der Halteschlitz (38) sich in einer axialen Richtung der Halteöffnung (32) erstreckt, wobei das Halteelement (30) ferner ein Schlitzregulierungselement (40) umfasst, das dazu ausgelegt ist, diese Breite einzustellen.

2. Zahnradsystem (10) nach Anspruch 1, wobei das Basiselement (20) dazu ausgelegt ist, das zweite Zahnrad (16) zu unterstützen.

3. Zahnradsystem (10) nach Anspruch 1 oder 2, wobei das erste Zahnrad (14) an einer ersten Drehachse (26) unterstützt ist und die Schwenkanordnung (24) eine Schwenkachse (28) besitzt, die zu der ersten Drehachse (26) im Wesentlichen parallel ist.

4. Zahnradsystem (10) nach einem der vorhergehenden Ansprüche, wobei das Belastungselement (34) eine Umfangsnut (42) aufweist, in die das Regulierungselement (40) im Betrieb wenigstens teilweise eingreift, um zum Halten des Belastungselements (40) in der Halteöffnung (32) zu beizutragen.

5. Zahnradsystem (10) nach einem der vorhergehenden Ansprüche, wobei die Unterstützungsstruktur (12) betreibbar ist, um das Einstellen des Spiels (22) durch Einstellen eines Abstandes (44) in einer ersten Richtung zwischen dem ersten Zahnrad (14) und dem Basiselement (20) zu unterstützen, wobei sich das Schlitzregulierungselement (40) im Betrieb in einer Richtung erstreckt, die zu der ersten Richtung im Wesentlichen senkrecht ist.

6. Zahnradsystem (10) nach einem der vorhergehenden Ansprüche, wobei die Schwenkanordnung (24) dazu ausgelegt ist, einen Stift (46) aufzunehmen, um die Unterstützungsstruktur (12) schwenkbar zu befestigen.

7. Zahnradsystem (10) nach Anspruch 6, wobei der Stift (46) einen im Wesentlichen ringförmigen Querschnitt hat.

8. Zahnradsystem (10) nach Anspruch 7, wobei der Stift (46) einen in Längsrichtung sich erstreckenden Schlitz umfasst.

9. Zahnradsystem (10) nach einem der Ansprüche 6 bis 8, wobei die Schwenkanordnung (24) wenigstens eine Befestigungsöffnung (48) in der Unterstützungsstruktur (12) aufweist, die dazu ausgelegt ist, den Stift (46) aufzunehmen.

10. Zahnradsystem (10) nach einem der vorhergehenden Ansprüche, wobei die Abstandshaltemittel (23) eine Abstandshalteschicht (50) umfassen, die dazu ausgelegt ist, während des Einstellens des Spiels (22) zwischen dem ersten und dem zweiten Zahnrad (14, 16) angeordnet zu werden.

11. Zahnradsystem (10) nach Anspruch 10, wobei die Abstandshalteschicht (50) eine Abstandshaltebeschichtung (52) umfasst, die dazu ausgelegt ist, auf das erste Zahnrad (14) aufgebracht zu werden.

12. Zahnradsystem (10) nach Anspruch 10 oder 11, wobei die Abstandshalteschicht (50) eine Abstandshaltebeschichtung (52) umfasst, die dazu ausgelegt ist, auf das zweite Zahnrad (16) aufgebracht zu werden.

13. Zahnradsystem (10) nach einem der Ansprüche 10 bis 12, wobei die Abstandshalteschicht (50) dazu ausgelegt ist, nach dem Einstellen des Spiels (22) entfernt oder abgetragen zu werden.

14. Fahrzeugmotor (54), der ein Zahnradsystem (10) nach einem der vorhergehenden Ansprüche umfasst.

15. Fahrzeug, das ein Zahnradsystem (10) nach einem der Ansprüche 1 bis 13 und/oder einen Fahrzeugmotor (54) nach Anspruch 14 umfasst.

## Revendications

1. Système d'engrenage (10), comprenant une structure de support (12) apte à supporter une première roue d'engrenage (14), ledit système d'engrenage (10) comprenant de plus une deuxième roue d'engrenage (16), ladite structure de support (12) étant munie de moyens de fixation (18) destinés à fixer la structure de support (12) à un élément de base (20), lesdits moyens de fixation (18) permettant de modifier un jeu (22) entre dents entre la première et la deuxième roues d'engrenage (14, 16), dans lequel ledit système d'engrenage (10) utilise un moyen d'entretroise (23) entre la première et la deuxième roues d'engrenage (14, 16) pendant le réglage dudit jeu (22) entre dents, ***caractérisé en ce que*** lesdits moyens de fixation (18) comprennent un ensemble pivotal (24) autour duquel ladite structure de support (12) est apte à être montée pivotante, lesdits moyens de fixation (18) comprenant au moins un élément de retenue (30) apte à fixer ladite structure de support (12) à une valeur choisie dudit jeu (22) entre dents, ledit au moins un élément de retenue (30) comprenant de plus une ouverture de retenue (32) apte à recevoir un élément de contrainte (34) apte à enceindre au moins partiellement un élément fileté (36), ledit élément fileté (36) étant apte à coopérer pour raccorder mutuellement ladite structure de support (12) et ledit élément de base (20), ladite ouverture de retenue (32) dudit élément de retenue (30) comprenant une fente de retenue (38) présentant une largeur de fente, ladite fente de retenue (38) s'étendant dans une direction axiale de ladite ouverture de retenue (32), ledit élément de retenue (30) comprenant de plus un élément (40) de réglage de la fente apte au réglage de ladite largeur.

2. Système d'engrenage (10) selon la revendication 1, dans lequel ledit élément de base (20) est apte à supporter ladite deuxième roue d'engrenage (16).

3. Système d'engrenage (10) selon la revendication 1 ou 2, dans lequel ladite première roue d'engrenage (14) est supportée sur un premier axe de rotation (26) et ledit ensemble pivotal (24) possède un axe (28) de pivot sensiblement parallèle audit premier axe de rotation (26).

4. Système d'engrenage (10) selon l'une quelconque des revendications précédentes, dans lequel l'élément de contrainte (34) comprend tout autour une gorge circonférentielle (42) que l'élément de réglage (40) intersecte au moins partiellement en fonctionnement pour aider à retenir l'élément de contrainte (34) dans l'ouverture de retenue (32).

5. Système d'engrenage (10) selon l'une quelconque des revendications précédentes, dans lequel ladite structure de support (12) est utilisable pour aider au réglage dudit jeu (22) entre dents par le réglage d'une distance (44) dans une première direction entre la première roue (14) d'engrenage et l'élément de base (20), dans lequel ledit élément (40) de réglage de la fente en fonctionnement s'étend dans une direction sensiblement perpendiculaire à ladite première direction.

6. Système d'engrenage (10) selon l'une quelconque des revendications précédentes, dans lequel ledit ensemble pivotal (24) est apte à recevoir une broche (46) pour la fixation pivotale de ladite structure de support (12).

7. Système d'engrenage (10) selon la revendication 6, dans lequel ladite broche (46) possède une section transversale sensiblement annulaire.

8. Système d'engrenage (10) selon la revendication 7, dans lequel ladite broche (46) comprend une fente s'étendant longitudinalement.

9. Système d'engrenage (10) selon l'une quelconque des revendications 6 à 8, dans lequel ledit ensemble pivotal (24) comprend au moins une ouverture de fixation (48) dans ladite structure de support (12) apte à recevoir ladite broche (46).

10. Système d'engrenage (10) selon l'une quelconque des revendications précédentes, dans lequel lesdits moyens d'entretoise (23) comprennent une couche (50) d'écartement apte à être placée entre la première et la deuxième roues d'engrenage (14, 16) pendant le réglage dudit jeu (22) entre dents.

11. Système d'engrenage (10) selon la revendication 10, dans lequel ladite couche d'entretoise (50) comprend un revêtement (52) d'écartement apte à être appliqué sur la première roue d'engrenage (14).

12. Système d'engrenage (10) selon la revendication 10 ou 11, dans lequel ladite couche (50) d'écartement comprend un revêtement (52) d'écartement apte à être appliqué sur la deuxième roue d'engrenage (16).

13. Système d'engrenage (10) selon l'une quelconque des revendications 10 à 12, dans lequel ladite couche (50) d'écartement est apte à être retirée ou éliminée par l'usage après le réglage dudit jeu (22) entre dents.

14. Moteur (54) de véhicule comprenant un système d'engrenage (10) selon l'une quelconque des revendications précédentes.

15. Véhicule comprenant un système d'engrenage (10) selon l'une quelconque des revendications 1 à 13 et/ou un moteur (54) de véhicule selon la revendication 14.
